**Europäisches Patentamt**

**European Patent Office**

**Office européen des brevets**

(19)

(11) Veröffentlichungsnummer: **0 091 983**
**B1**

(12) ## EUROPÄISCHE PATENTSCHRIFT

(45) Veröffentlichungstag der Patentschrift:
05.11.86

(51) Int. Cl.⁴: **F 16 J 15/32**

(21) Anmeldenummer: **82107033.1**

(22) Anmeldetag: **04.08.82**

(54) **Kassettendichtung.**

(30) Priorität: **15.04.82 DE 3213809**

(43) Veröffentlichungstag der Anmeldung:
**26.10.83 Patentblatt 83/43**

(45) Bekanntmachung des Hinweises auf die Patenterteilung:
**05.11.86 Patentblatt 86/45**

(84) Benannte Vertragsstaaten:
**AT BE CH DE FR GB IT LI LU NL SE**

(56) Entgegenhaltungen:
**GB-A-590 874**
**GB-A-879 503**
**GB-A-881 607**

**INTERNATIONAL AUTOMOTIVE ENGINEERING
CONGRESS, Detroit, Mich., 8.-12. Januar 1973, Nr.
730049, Seiten 1-8, Society of Automotive
Engineers, Inc., New York, USA J.D. Symons:
"Elastohydrodynamic sealing systems"**

(73) Patentinhaber: **Firma Carl Freudenberg, Höhnerweg
4, D-6940 Weinheim/Bergstrasse (DE)**

(72) Erfinder: **Schmitt, Wilhelm, Dr., Im Vordersberg 8,
D-6148 Heppenheim- Erbach (DE)**

(74) Vertreter: **Weissenfeld- Richters, Helga, Dr.,
Höhnerweg 2, D-6940 Weinheim/Bergstrasse (DE)**

## Beschreibung

Kassettendichtung, bestehend aus einem U-Ring mit in Richtung des relativ bewegten Maschinenteiles vorspringenden Schenkeln und einer fest verbundenen Dichtlippe aus gummielastischem Werkstoff, die unter einer Vorspannung an einer gehärteten und/oder geglätteten Lauffläche des Gegenringes anliegt, wobei der Gegenring einen geringen axialen Abstand von den Schenkeln aufweist und durch eine Dämpfungsschicht aus weichelastischem Werkstoff verdrehsicher auf der Welle festgelegt ist.

Auf eine Kassettendichtung der vorgenannten Art nimmt die GB-A- 879 503 Bezug. Der Gegenring ist dabei auf einer Schicht aus gummielastischem Werkstoff gelagert und wird von den sich in radialer Richtung nach innen erstreckenden Schenkeln des Außenringes axial umschlossen. Die für den Einbau erforderliche Kraft kann daher nur unter Zwischenschaltung der Schenkel des Außenringes auf den Innenring übertragen werden, was zu einer rückwärts gerichteten Deformierung der gummielastischen Schicht durch die Welle führt. Diese kann bei Nachlassen der Einpreßkraft nicht selbsttätig ausgeglichen werden. Sie führt zu einer bleibenden axialen Verpressung zwischen dem Gegenring und dem sich in radialer Richtung nach innen erstreckenden Schenkel des Außenringes, über den die Einpressung vorgenommen worden ist. Neben den durch die hohe Reibung verursachten Übertragungsverlusten kann starker Verschleiß bzw. vorzeitiger Ausfall der Dichtung hiervon die Folge sein. Eine definierte Zuordnung zwischen der eigentlichen Dichtlippe und dem Gegenring in axialer Richtung ist keinesfalls gesichert. Sie kann zu einem unbefriedigenden Abdichtungsergebnis führen.

Bei der Kassettendichtung nach der GB-A- 881 607 umschließt der Gegenring den Außenring in axialer Richtung mit zwei U-förmig nach außen vorspringenden Schenkeln. Der Gegenring ist auf einer gummielastischen Schicht gelagert und weist eine aus dem gleichen Werkstoff bestehende Beschichtung auf der dem Außenring zugewandten, axialen Begrenzungsfläche des einen Schenkels auf. Diese dient als Schleißschicht und gewährleistet eine präzise axiale Zuordnung zwischen beiden Ringen.

Sie bedingt zugleich hohe Übertragungsverluste zumindest während der Einlaufphase. Außerdem muß bei hohen Wellendrehzahlen ein hoher Verschleiß der Dichtlippe in Kauf genommen werden, weil die erforderliche Kühlung und Schmierung der Dichtlippe nicht mehr gegeben ist.

J.D. Symons nimmt in seinem Aufsatz "Elastohydrodynamic sealing systems", veröffentlicht auf dem International Automotive Engineering Congress, Detroit, Mich., 8.-12. Januar 1973, Nr. 730049, Seiten 1-8, Society of Automotive Engineers, Inc., New York, USA, Bezug auf eine Anordnung zur Abdichtung von Wellen, bei der einer mit hydrodynamisch wirkenden Rückförderelementen versehenen Welle ein von solchen Rückförderelementen freier Dichtring zugeordnet war. Ein befriedigendes Abdichtungsergebnis konnte dabei nur für eine Richtung der Drehbewegung erzielt werden. Eine Kassettendichtung mit hydrodynamisch wirkenden Rückförderelementen wurde nicht erwähnt.

Der Erfindung liegt die Aufgabe zugrunde, eine Kassettendichtung zu zeigen, die ein verbessertes Verschleißverhalten, verminderte Übertagungsverluste sowie weitgehend unabhängig von der Drehzahl ein gutes Abdichtungsergebnis aufweist.

Diese Aufgabe wird erfindungsgemäß bei einer Kassettendichtung der eingangs genannten Art dadurch gelöst, daß der Gegenring freiliegende Ringvorsprünge zum Einpressen der Kassettendichtung in den Spalt zwischen Welle und Gehäusebohrung aufweist, daß die Dämpfungsschicht eine Rückfederung aufweist, die bei Nachlassen der Einpreßkraft einen Ausgleich des axialen Spiels zwischen den Schenkeln und dem Gegenring bewirkt, daß die Lauffläche mit wenigstens einer Drallrippe und/oder Drallnute zur Rückförderung unter der Dichtlippe hindurchgedrungener Leckflüssigkeit in den abgedichteten Raum versehen ist.

Der Gegenring der vorgeschlagenen Kassettendichtung hat die in technischer Hinsicht außerordentlich einfach zu realisierende Gestalt eines Hohlzylinders. Seine Herstellung ist dadurch kostengünstig möglich unter Verwendung beliebiger Werkstoffe, was optimale Werkstoffpaarungen in bezug auf die Erzielung eines niedrigen Reibungskoeffizienten gegenüber der Dichtlippe ermöglicht. In Fällen, in denen diese aus Gummi oder einem Kunststoff besteht, beispielsweise aus PTFE, kommen neben Stahl bevorzugt Grau- oder Kugelgraphitguß, Sinterbronze und Glas zur Anwendung, wobei die eigentliche Lauffläche gegebenenfalls zusätzlich geglättet und gehärtet sein kann.

Das für die Herstellung eines Gegenringes verwendete Material ist somit aus einem großem Spektrum wählbar, es darf jedoch keinerlei unausgeglichene innere Spannung aufweisen, die zu einer Veränderung der Rotationssymmetrie während des Gebrauchs führen kann. Sofern Knetlegierungen aus Metall zur Anwendung kommen, beispielsweise ihrer Art nach tiefziehbare Materialien, ist deshalb in Zusammenhang mit der Herstellung des Hohlzylinders die Erzeugung einer ein- oder beidseitigen, axialen Abkröpfung unbedingt zu vermeiden, weil diese zwangsläufig zu sich in den Hohlzylinder hineinerstreckenden, über den Umfang verteilten Zonen einer stark und weniger stark ausgeprägten Orientierung der Kristallitstruktur führt.

Eine entsprechende Abkröpfung hat deshalb eine auf den Umfang verteilte, unterschiedliche Oberflächenstruktur und damit unausgeglichene Reibungsverhältnisse ebenso zur Folge wie eine Welligkeit. Beides läßt sich durch eine spanabhebende Bearbeitung nicht korrigieren. Sofern kaltgezogene Materialien zur Anwendung kommen, ist unbedingt zu beachten, daß die Kristallitstruktur durchgehend in Umfangs- oder Längsrichtung oerientiert ist. Der benötigte Hohlzylinder läßt sich deshalb nicht durch Ausstanzen aus einem Tiefziehblech gewinnen, sondern bevorzugt aus rohrförmig angelieferten Halbzeugen.

Stranggepreßte und/oder kaltgezogene Materialien haben häufig herstellungsbedingt sowohl ein absolut rotationssymmetrisches Profil als auch eine weitestgehend von Rauhigkeiten freie Oberfläche. Die Verwendung derartiger Materialien zur Herstellung des Gegenringes wird aus diesem Grunde bevorzugt. Bei auf andere Weise erhaltenen Materialien kann im Einzelfalle eine Nachbearbeitung durch Schleifen und gegebenenfalls Polieren zweckmäßig sein. Auch die in diesem falle entstehenden Kosten sind vergleichsweise gering, wenn das Ablängen der einzelnen Gegenringe den entsprechenden Bearbeitungsvorgängen nachgeschaltet ist.

Einige der vorgenannten Werkstoffe zeichnen sich nicht nur durch eine große Härte der Oberfläche aus, was außerordentlich positiv ist, sondern zusätzlich durch eine große Sprödigkeit, die eine Zerstörung beim Einbau oder als Folge der unterschiedlichen Wärmedehnung eines unmittelbar anliegenden Maschinenteiles zur Folge haben kann. Derartige Schwierigkeiten treten bei der vorgeschlagenen Ausführung jedoch nicht auf. Die Dämpfungsschicht bewirkt vielmehr einen Ausgleich derart verursachter Spannungen sowie eine gute statische Abdichtung gegenüber dem angrenzenden Maschinenteil. Sie ist darüber hinaus so mit dem axialen Spiel zwischen den Stirnflächen des Gegenringes und den nach innen vorspringenden Schenkeln des Außenringes abgestimmt, daß die Rückfederung der Dämpfungsschicht bei Nachlassen der über den Ringvorsprung aufgebrachten Einpreßkräfte einen selbsttätigen Ausgleich dieses Spiels bewirkt. Außen- und Innenring können insofern einander nicht beschädigen und die übertragung der Drehbewegung hemmen. Innenring und Dichtlippe können sowohl werkstoffmäßig als auch hinsichtlich ihrer speziellen Ausbildung unter Ausklammerung der diesbezüglichen Probleme aneinander angepaßt werden, was es erlaubt, ein verbessertes Abdichtungsergebnis bei vermindertem Verschleiß und verminderten Übertragungsverlusten zu erzielen.

Die Dichtlippe ist durch ein dünnes, membranartig ausgebildetes Übergangsstück mit dem U-Ring verbunden, und sie vermag dadurch radialen Wellenverlagerungen auch bei Verwendung relativ zäher Werkstoffe leicht zu folgen. Eine nennenswerte Dehnbarkeit ist wegen der absoluten Rotationssymmetrie des Gegenringes nicht erforderlich und es können daher viele Werkstoffe in die Überlegungen einbezogen werden, die bisher für die Herstellung einer dynamisch beanspruchten Dichtlippe nicht geeignet schienen, beispielsweise PP oder PES. Auch eine Beschichtung der auf Reibung beanspruchten Bereiche mit einer dünnen Folie aus einem solchen Werkstoff kommt in Betracht.

Die in radialer Richtung vorspringenden Schenkel des U-Ringes überlappen die axialen Stirnflächen des Gegenringes beiderseits in einem geringen Abstand.

Der geringe Abstand hat zugleich die Wirkung eines Labyrinthspaltes, durch den die eigentliche Dichtungszone ebenso vor Druckspitzen des abgedichteten Mediums geschützt wird wie vor abrasiv wirkenden Bestandteilen aus dem mediumsabgewandten Bereich. Eine weitere Verbesserung der Laufzeit ist hiervon die Folge.

Die Dichtlippe ist bei der vorgeschlagenen Kassettendichtung in einem überwiegend nach außen geschlossenen Raum angeordnet und der Lauffläche des Gegenringes von vornherein in einer ganz bestimmten Weise zugeordnet. Weder eine unsachgemäße Lagerung, noch eine unsachgemäße Montage können daher zu einer Beschädigung der Dichtlippe führen und einen vorzeitigen Ausfalt zur Folge haben.

Die Lauffläche des Gegenringes weist zur Erzielung der dynamischen Abdichtwirkung wenigstens eine Drallrippe und/oder Drallnute zur Rückförderung unter der Dichtlippe hindurchgedrungener Leckflüssigkeit in den abgedichteten Raum auf. Diese ist bevorzugt ineinander übergehend ausgebildet und weist, über den Umfang gesehen, einen wechselnden, axialen Abstand von der Dichtlippe auf.

In Fällen, in denen mehrere derartige Drallrippen und/oder Drallnuten vorhanden sind, hat es sich als zweckmäßig erwiesen, diese untereinander identisch auszubilden und in gleichmäßig auf den Umfang verteilten Abständen anzuordnen.

Der den Gegenring bildende Hohlzylinder kann beiderseitige Ringvorsprünge aufweisen, die die Schenkel des U-Ringes jeweils übergreifen und die von diesen einen radialen Abstand haben. Neben einer Verlängerung des von beiden Teilen eingeschlossenen Labyrinthspaltes resultiert eine nochmals verbesserte gegenseitige Zuordnung in axialer und radialer Richtung. Der Labyrinthspalt hat bevorzugt im Bereich der Ringvorsprünge dieselbe Breite wie im Bereich der axialen Stirnflächen des Hohlzylinders.

Der U-Ring läßt sich kostengünstig aus zwei unter Einschließung des Gegenringes dichtend verbundenen Winkelringen erzeugen. Diese können aus Metall oder Kunststoff bestehen, wobei der metallischen Ausführung wegen der größeren Robustheit im allgemeinen der Vorzug gegeben wird. Zugleich ermöglicht es eine Ausführung aus Metall, eine Dichtlippe aus einem gummielastischen Werkstoff durch Vulkanisation unmittelbar an einen der beiden Winkelringe anzuformen und dabei zugleich eine eventuell nachgeschaltete Staublippe und/oder eine Gummischicht zur Abdichtung gegenüber dem anderen Winkelring anzubringen. Der Zusammenbau der einzelnen Teile erfordert in diesem Falle lediglich ein einfaches Zusammenfügen und Verpressen.

Die Verwendung der vorgeschlagenen Kassettendichtung erübrigt im Vergleich zu üblichen Rsdialwellendichtringen eine Feinbearbeitung und Härtung des relativ bewegten Maschinenteils. Dieses hat keinerlei unmittelbaren Kontakt zu der aus einem polymeren Werkstoff bestehenden Dichtlippe, es kann nicht einlaufen und auch bei wiederholtem Austausch erübrigt sich eine die Oberfläche der Welle ausgleichende Bearbeitung. Die reibungsspezifischen Verhältnisse im Bereich der Dichtlippe lassen sich kostengünstig optimieren, wodurch die thermische Belastung der Dichtlippe wesentlich vermindert ist, und es ist ein hervorzuhebender Vorteil, daß eine unsachgemäße Lagerung und Montage regelmäßig eine Verkürzung der Laufzeit nicht mehr verursachen kann.

Der Gegenstand der vorliegenden Erfindung wird nachfolgend anhand der in der Anlage beigefügten Zeichnung weiter verdeutlicht. Es zeigen:

Figur 1 eine Kassettendichtung für den Spalt zwischen einer Gehäusewandung und einer sich drehenden Welle, bei der der Gegenring mit Ringvorsprüngen versehen ist und bei der ein zusätzlicher Schmutzabweiser der Staublippe nachgeschaltet ist.

Figur 2 eine Kassettendichtung für den Spalt zwischen einem umlaufenden Gehäuse und einer ruhenden Achse.

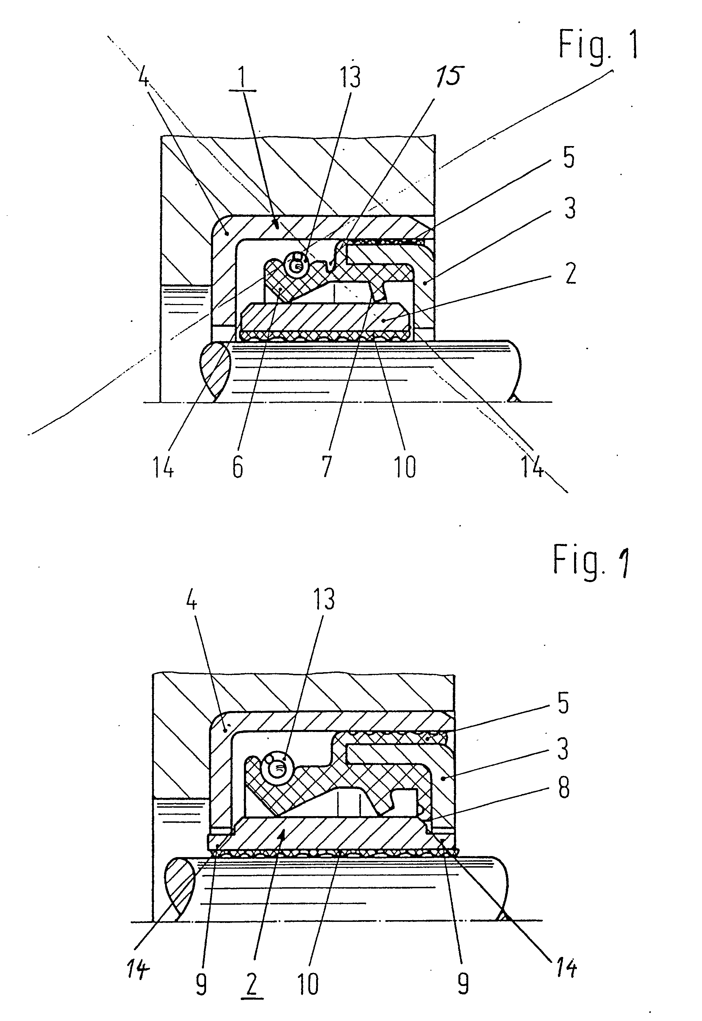

Die Kassettendichtung gemäß Figur 1 besteht aus einem flüssigkeitsdicht und verdrehsicher in der Bohrung eines Gehäuses verankerten U-Ring 1 mit der Dichtlippe 6, die von der Ringwendelfeder 13 gegen die Lauffläche des mit der Welle 11 umlaufenden Gegenringes 2 gedrückt wird.

Der U-Ring 1 besteht aus zwei durch Tiefziehen erzeugten Winkelringen aus Stahlblech, nämlich dem äußeren Winkelring 4 und dem inneren Winkelring 3. Diese sind derart zusammengefügt, daß die sich in axialer und in radialer Richtung erstreckenden Schenkel des Profils einen in etwa rechteckig begrenzten Hohlraum umschließen. Die Maßhaltigkeit der beiden Winkelringe schließt Abweichungen von der absoluten Rotationssymmetrie in den üblichen Toleranzgrenzen ein. Diese Abweichungen sind jedoch insofern ohne entscheidende Bedeutung als ein unmittelbarer Kontakt zu relativ bewegten Flächen nicht vorhanden ist. Außerdem ergibt sich durch die kraftschlüssige Einpressung in die rotationssymmetrisch erzeugte Gehäusebohrung ein gewisser Ausgleich von unterschiedlichen Abweichungen.

Der innere Winkelring 3 ist gegenüber dem äußeren Winkelring 4 durch eine Gummischicht 5 flüssigkeitsdicht und verdrehsicher festgelegt. Die Gummischicht 5 ist ein unmittelbarer Bestandteil des die Dichtlippe 6 und die Staublippe 7 umfassenden Werkstoffkörpers, der aus Gummi besteht und durch Vulkanisation adhäsiv mit dem inneren Winkelring 3 verbunden ist. Die Härte Shore A beträgt 86 und die Profile von Dichtlippe und Staublippe entsprechen denjenigen der bekannten Radialwellendichtringe. Radialen Wellenverlagerungen vermag die aus einem relativ harten Werkstoff bestehende Dichtlippe durch eine gelenkartig wirkende Einschnürung 15 leicht zu folgen. Die Staublippe wird allein durch ihre Vorspannung gegen die Lauffläche des Gegenringes 2 gedrückt, bei der Dichtlippe ist zur Unterstützung der Anpressung eine Ringwendelfeder 13 aus Metall vorgesehen. Hierdurch wird eine ausgeglichene Anpressung über lange Zeiträume begünstigt.

Der Gegenring 2 besteht aus Glaskeramik und weist beiderseitige Ringvorsprünge 9 auf, die die in radialer Richtung nach innen vorspringenden Schenkel des U-Ringes 1 in axialer Richtung übergreifen. Hierdurch wird eine verbesserte radiale und axiale gegenseitige Zuordnung erreicht. Das axiale Spiel zwischen den Stirnflächen und den nach innen vorspringenden Schenkeln des U-Ringes 1 gleicht sich außerdem durch die Rückfederung der Dämpfungsschicht 10 bei Nachlassen der Einpreßkraft selbsttätig aus, wenn die Einpressung in den Spalt zwischen der Welle 11 und der Gehäusebohrung durch eine Kraftausübung auf den freiliegenden Ringvorsprung 9 vorgenommen wird.

Die Stirnflächen 14 des Gegenringes 2 haben beiderseits einen axialen Abstand von den sich in radialer Richtung erstreckenden Schenkeln des U-Ringes 1 von jeweils 0,2 mm.

Der Staublippe 7 ist in diesem Falle jedoch ein Schmutzabweiser 8 nachgeschaltet, der eine Verwendung der Kassettendichtung unter erschwerten Bedingungen ermöglicht, beispielsweise im Bereich des Achsantriebes von Erdbewegungsgeräten.

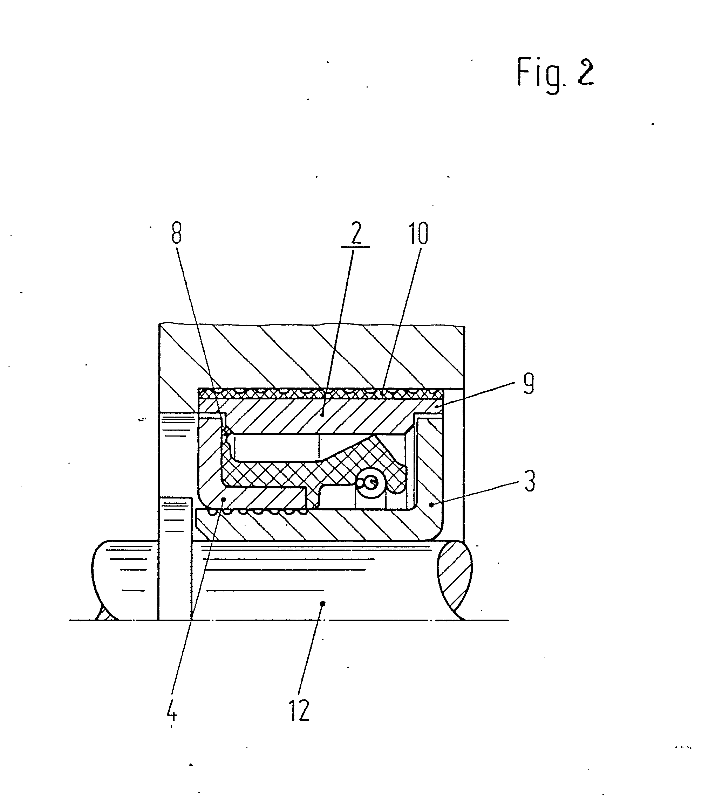

Figur 2 nimmt Bezug auf die Abdichtung einer Nabe gegenüber einer feststehenden Achse 12. Wegen der besonderen Schmutzbelastung ist auch in diesem Falle ein Schmutzabweiser 8 vorgesehen, der der eigentlichen Dichtlippe nachgeschaltet ist. Eine Staublippe ist nicht vorhanden und die Lauffläche wird durch die Innenseite des mit der Nabe umlaufenden Gegenringes 2 gebildet. Für die Anpressung der Dichtlippe ist eine auf Druck beanspruchbare Ringwendelfeder vorgesehen, die radial innerhalb der Dichtlippe in einer Nute gelagert ist.

Der Gegenring 2 besteht aus einem korrosionsfesten Edelstahl und weist eine hochglanzpolierte Beschichtung aus Molybdän zur Verbesserung der Abriebbeständigkeit der Lauffläche auf. Beiderseitige Ringvorsprünge 9 und eine in Umfangsrichtung gerippte Dämpfungsschicht 10 aus Weichgummi erleichtern die paßgenaue Montage.

## Patentansprüche

1. Kassettendichtung, bestehend aus einem U-Ring mit in Richtung des relativ bewegten Maschinenteiles vorspringenden Schenkeln (3, 4) und einer fest verbundenen Dichtlippe (6) aus gummielastischem Werkstoff, die unter einer Vorspannung an einer gehärteten und/oder geglätteten Lauffläche eines Gegenringes (2) anliegt, wobei der Gegenring einen geringen axialen Abstand von den Schenkeln aufweist und durch eine Dampfungsschicht (10) aus weichelastischem Werkstoff verdrehsicher auf der Welle festgelegt ist, dadurch gekennzeichnet, daß der Gegenring (2) freiliegende Ringvorsprünge (9) zum Einpressen der Kassettendichtung in den Spalt zwischen Welle und Gehäusebohrung aufweist, daß die Dämpfungsschicht (10) eine Rückfederung aufweist, die bei Nachlassen der Einpreßkraft einen Ausgleich des axialen Spiels zwischen den Schenkeln (3) und dem Gegenring (2) bewirkt, und daß die Lauffläche mit wenigstens einer Drallrippe und/oder Drallnute zur Rückförderung unter der Dichtlippe (6) hindurchgedrungener Leckflüssigkeit in den abgedichteten Raum versehen ist.

2. Kassettendichtung nach Anspruch 1, dadurch gekennzeichnet, daß die Drallrippe und/oder die Drallnute die Lauffläche umschließt und ineinander übergehend ausgebildet ist, wobei der axiale Abstand von der Dichtlippe (6) stetig veränderlich ist.

3. Kassettendichtung nach Anspruch 1 bis 2, dadurch gekennzeichnet, daß eine Vielzahl identisch ausgebildeter Drallrippen und/oder Drallnuten vorhanden und gleichmäßig auf dem Umfang verteilt ist.

4. Kassettendichtung nach Anspruch 3, dadurch gekennzeichnet, daß der radiale und der axiale Abstand zwischen den Schenkeln (3, 4) und den Ringvorsprüngen (9) bzw. den Stirnflächen (14) des Gegenringes (2) identisch ist.

5. Kassettendichtung nach Anspruch 1 bis 4, dadurch gekennzeichnet, daß die Dämpfungsschicht (10) eine sich in Umfangsrichtung erstreckende Rippung aufweist.

## Claims

1. A unitised lip seal comprising a U-ring with limbs (3, 4) projecting in the direction of the relatively moved engine part and a firmly connected sealing lip (6) of elastomeric material which bears under a pretension against a hardened and/or smoothed running surface of a counter ring (2), the counter ring (2) having slight axial clearance from the limbs and being fixed, secure against torsion, on the shaft by an absorption layer (10) of soft/resilient material, characterised in that the counter ring (2) has exposed annular projections (9) for pressing the unitised lip seal into the gap between shaft and casing bore, in that the absorption layer (10) has a resiliency which effects a compensation of the axial play between the limbs (3) and the counter ring (2) when the pressing-in force relaxes, and in that the running surface is provided with at least one helical rib and/or helical flute for returning to the sealed space leakage fluid which has penetrated under the sealing lip (6).

2. A unitised lip seal according to claim 1, characterised in that the helical rib and/or the helical flute surrounds the running surface and is designed to merge one into the other, so that the axial clearance of the sealing lip (6) is continually varying.

3. A unitised lip seal according to claim 1 or 2, characterised in that there is a plurality of identically designed helical ribs and/or helical flutes evenly distributed on the circumference.

4. A unitised lip seal according to claim 3, characterised in that the radial clearance and the axial clearance between the limbs (3, 4) and the annular projection (9) and, respectively, the faces (14) of the counter ring (2) are identical.

5. A unitised lip seal according to any of claims 1 to 4, characterised in that the absorption layer (10) has a ribbing extending in the circumferential direction.

## Revendications

1. Cartouche d'étanchéité constituée d'une bague en "U" avec des branches (3, 4) en saillie en direction de la pièce de machine en mouvement relatif et d'une lèvre d'étanchéité (6) en matériau élastique à base de caoutchouc qui y est fixée à demeure et qui appuie avec précontrainte sur la surface de glissement trempée et/ou polie d'une contre-bague (2), la contre-bague (2) étant disposée à une faible distance axiale des branches et étant fixée sur l'arbre, sans possibilité de rotation, au moyen d'une couche d'amortissement (10) en matériau mou élastique, caractérisée en ce que la contre-bague (2) présente des saillies annulaires libres (9) pour insérer par pression la cartouche d'étanchéité dans le jeu entre l'arbre et l'alésage du corps, en ce que la couche d'amortissement (10) présente un dispositif de rappel élastique qui provoque une compensation du jeu axial entre les branches (3) et la contre-bague (2) quand la force d'insertion est supprimée, et en ce que la surface de glissement est pourvue d'au moins une nervure hélicoïdale et/ou d'une rainure hélicoïdale, pour renvoyer dans, l'enceinte à rendre étanche le liquide de fuite suintant sous la lèvre d'étanchéité (6).

2. Cartouche d'étanchéité selon la revendication 1, caractérisée en ce que la nervure hélicoïdale et/ou la rainure hélicoïdale entourent la surface de glissement et présentent une surface à transition progressive, la distance axiale par rapport à la lèvre d'étanchéité (6) étant continuellement variable.

3. Cartouche d'étanchéité selon les revendications 1 et 2, caractérisée en ce qu'un grand nombre de nervures hélicoïdales et/ou de rainures hélicoïdales de forme identique sont prévues et reparties uniformement sur toute la périphérie.

4. Cartouche d'étanchéité selon la revendication 3, caractérisée en ce que la distance radiale et la distance axiale entre les branches (3, 4) et les saillies annulaires (9) sous les surfaces frontales (14) de la contre-bague (2) sont identiques.

5. Cartouche d'étanchéité selon les revendications 1 à 4, caractérisée en ce que la couche d'amortissement (10) présente un nervurage s'étendant en direction de la périphérie.

Fig. 1

Fig. 1

Fig. 2